# EUROPEAN PATENT SPECIFICATION

(11) **EP 2 420 659 B1**
(45) Date of publication and mention of the grant of the patent: **12.06.2019**
(21) Application number: 11176584.8
(22) Date of filing: 04.08.2011
(51) Int. Cl.: F02B 29/04, F02B 39/00

(54) **Arrangement in a vehicle comprising a framework which supports a combustion engine and a charge air cooler**
Anordnung in einem Fahrzeug mit einem den Verbrennungsmotor und den Ladeluftkühler tragenden Rahmen
Agencement dans un véhicule comportant un cadre qui supporte un moteur de combustion et refroidisseur d'air de charge

(30) Priority: 16.08.2010 SE 1050855
(43) Date of publication of application: 22.02.2012
(73) Proprietor: Scania CV AB, 151 87 Södertälje (SE)
(72) Inventor: Jahns, Dieter, 151 63 Södertälje (SE)
(74) Representative: Scania CV AB

(56) References cited:
- EP-A1- 1 882 836
- WO-A1-2010/088711
- DE-A1- 4 017 408
- DE-A1- 10 123 156
- US-A1- 2006 022 460

## Description

### Technical field

The invention relates to an arrangement according to the preamble of claim 1.

### Background

This invention is intended for vehicles comprising a combustion engine and a system for cooling the charge air to the engine. Vehicles have a framework which constitutes the load bearing structure to which their various components are fastened. An example of these components is the engine, which is suspended movably to reduce transmission of vibrations etc. from the engine to the vehicle's framework. The engine and its fastenings to the framework are subject during use to considerable twisting moments which in combination with the engine's vibration-damping fastenings in the framework result in movements between the engine and the framework. The relative movement between engine and framework may amount to several centimetres.

A charge air cooler is connected to the engine. Warmed and compressed charge air from a turbo unit, also called compressor, is led from an air outlet situated somewhere on the engine to the charge air cooler, in which it is cooled before being returned to an air inlet belonging to the engine. The charge air cooler too is suspended on the vehicle's framework, usually at the front end of the vehicle to ensure good access to cooling air from the surroundings to the charge air cooler. The charge air cooler is likewise suspended movably relative to the vehicle's framework. At the connections of the charge air cooler to the engine's compressor, considerable pulsation forces occur during use because the pressure from the compressor causes movements and stresses at the connection and in the charge air cooler. The relative movements between the charge air cooler and the vehicle's engine during use may amount to several centimetres. This relative movement results in substantial requirements about how the engine and the charge air cooler are connected together. The charge air cooler and the engine are currently connected together via an elastic hose of quite considerable length. The hose is fastened to the charge air cooler and the engine by hose clamps and its substantial length allows the relative movement between the engine and the charge air cooler. However, this solution has certain disadvantages in that the elastic hose becomes long and more complicated to fasten securely to the various components. The length of the hose in combination with the forces which act upon the various components during use causes movements in the hose and consequent risk of it becoming detached from its fastenings and thereby reducing the service life of the arrangement. There is therefore need for an arrangement which solves or reduces the problems described above.

### Summary of the invention

The object of the present invention is to meet the above need. The object is achieved by an arrangement according to claim 1.

The arrangement according to the invention solves the problems described above by the previously used elastic hoses being replaced by respective first and second coupling pipes which are fastened in the vehicle's framework via two or more brackets and extend nearly all the way between the respective connections of the engine and the charge air cooler. An elastic connecting sleeve is provided between each coupling pipe and the respective connections of the engine and the charge air cooler.

The document US2006022460A1 relates to a duct assembly comprising a collar that defines a bore and has a first plurality of slots and a second plurality of slots formed therethrough. The collar includes an annular wall formed within the bore and an end groove formed at one end thereof. A duct has an end fitted within the end groove. A ring is disposed within the collar and abuts the annular wall. A ring retainer is disposed within the collar and abuts the ring. The ring retainer has a plurality of tabs formed thereon that fit within the first plurality of slots. An end of a port extends into the collar. The port has an annular groove formed along its circumference. A clip that has a plurality of arcs formed along its length extends around the collar. The arcs extend through the second plurality of slots into the annular groove of the port.

The document EP1882836A1 relates to a vehicle charge air cooler having an exhaust gas recirculation mixer integrated into the inlet, inlet manifold, outlet, or outlet manifold takes advantage of the incremental tooling opportunities associated with those components, as well as reducing the number of components and potential leak points in the exhaust gas recirculation system.

Using coupling pipes fastened to the framework between the engine and the charge air cooler means that the elastic connecting sleeves need only be dimensioned to absorb the relative movements between the connection of the engine and the end of the coupling pipe which points towards the engine and between the other end of the coupling pipe and the connection of the charge air cooler. The fact that these movements are clearly smaller than between the engine and the charge air cooler reduces the risk of the connections between the engine and the charge air cooler failing during use.

In an embodiment of the arrangement, the engine, the charge air cooler and the respective first and second coupling pipes are vibration-dampingly fastened to the vehicle's framework. It is advantageous if all of these components are vibration-dampingly fastened to the framework in order to prevent propagation of movements and vibrations to other components and portions of the vehicle.

In an embodiment of the arrangement, the charge air cooler has an inlet and an outlet which are situated close to its fastening to the framework. It is very advantageous if the charge air cooler's inlet and outlet are situated near to the framework, owing to the consequent reduction of the relative movements between the constituent components of the arrangement. This location also means that the forces which act upon the respective components are transmitted in an advantageous way.

In an embodiment of the arrangement, the engine's air outlet and air inlet are situated close to its fastening in the framework. It is very advantageous if the engine's air inlet and air outlet are situated near to its fastening in the framework, owing to the consequent reduction in the relative movements between the engine's air inlet and air outlet and the ends of the coupling pipes which point towards the engine.

In an embodiment of the arrangement, the respective first and second coupling pipes extend substantially parallel between the engine and the charge air cooler. This configuration of the arrangement results in a simple arrangement which is easy to fit.

In an embodiment of the arrangement, the framework has two beams and/or two base brackets to which the engine and the charge air cooler are fastened. The respective first and second coupling pipes extend substantially parallel with the beams or base brackets and are each fastened to different beams or base brackets. This configuration of the arrangement results in an arrangement whereby its respective constituent components will be easy to manufacture and fit.

The invention relates also to a vehicle which comprises an arrangement according to any one of the embodiments described above.

### Brief description of the drawing

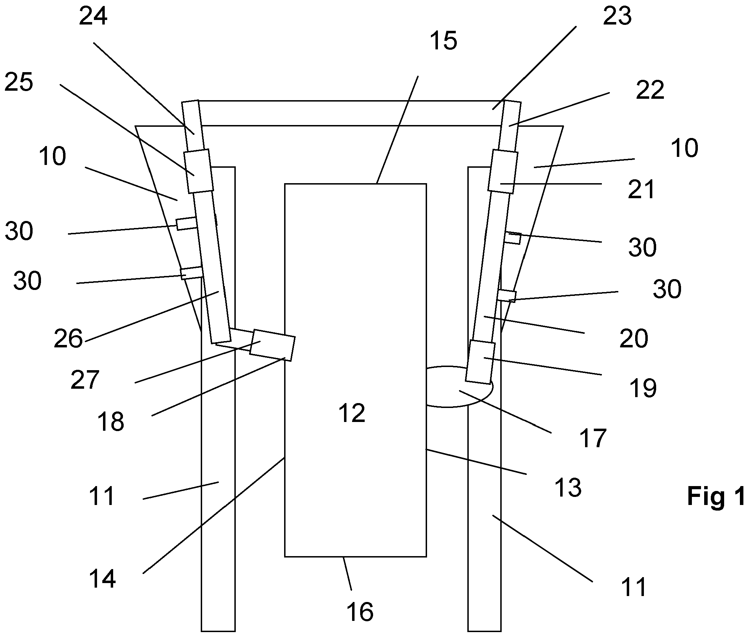

An embodiment of the invention is explained in more detail below with reference to Figure 1, which depicts schematically an arrangement according to the invention as seen from above.

### Detailed description of the invention

Figure 1 depicts schematically an arrangement according to the invention. Only the components which form part of the arrangement appear in the drawing.

The arrangement comprises two substantially parallel beams 11 which together with two base brackets 10 constitute the framework of the arrangement. The framework also serves as the load bearing structure for various undepicted components which form part of the vehicle.

The framework supports a combustion engine 12. The engine comprises an undepicted compressor, also called turbo unit, the function of which is to increase the power which can be obtained from the engine, as well as various different components which are not essential to this patent application and are therefore not mentioned herein.

The engine is usually arranged in such a way that its crankshaft, which extends through it, is substantially parallel with the beams 11. The engine is situated between the two beams 11 and is vibration-dampingly fastened to each beam 11. The engine has respective first and second longitudinal sides 13, 14 and respective front and rear ends 15, 16. During use, considerable forces and twisting moments are generated which cause movements between the engine and the framework in both the longitudinal and transverse directions, and twisting moments in the engine.

The engine has an air outlet 17 situated close to its first side 13 and an air inlet 18 situated close to its second side. Charge air from the compressor flows through the air outlet, and the air inlet 18 is intended to lead charge air to the compressor. The respective locations of the air outlet and air inlet may of course vary depending on the configuration of the engine.

The charge air from the compressor is led from the engine's air outlet 17 via a first elastic connecting sleeve 19 to a first coupling pipe 20, and via a second elastic connecting sleeve 21 to an inlet 22 belonging to a charge air cooler 23. The coupling pipe 20 is vibration-dampingly fastened in the framework via two or more brackets 30 and has a length such that it extends nearly all the way between the air outlet of the engine and the inlet 22 of the charge air cooler 23. The ends of the coupling pipe 20 should not come into contact with the engine's air outlet 17 and the charge air cooler's inlet 22 during use, as the relative movements between the ends of the coupling pipe and the engine's air outlet and the charge air cooler's inlet are to be absorbed by the elastic connecting sleeves 19 and 21 which are fastened to the coupling pipe and to the air outlet and inlet, e.g. by hose clamps.

The charge air cooler 23 is arranged substantially transversely with the two beams 11. Its inlet 22 is situated at one end, and its outlet 24 is situated at the opposite end, so that the compressed charge air from the compressor is led through ducts in the charge air cooler 23, in which it is cooled by surrounding air which flows past the ducts in the charge air cooler 23 before being led through the outlet 24 and back to the engine's air inlet 18 via a third elastic connecting sleeve 25, a second somewhat curved coupling pipe 26 and a fourth elastic connecting sleeve 27. The second coupling pipe too is fastened in the beam 11 by means of brackets 30. Alternatively, the coupling pipes might be fastened in the base brackets 10 in cases where these also are part of the vehicle's framework.

The charge air cooler's inlet 22 and outlet 24 are with advantage so directed that they point towards the engine 12 in order to minimise the changes in direction in the elastic connecting sleeves and the coupling pipes, since changes of direction result in flow losses and impaired charge air flow.

The coupling pipes 20, 26 are with advantage of substantially constant cross-sectional area in order to avoid flow losses in them. The ends of the coupling pipes 20, 26 are with advantage configured in such a way that the elastic connecting sleeves 19, 21, 25, 27 can be drawn onto the coupling pipes and be fastened by one or more undepicted hose clamps.

Figure 1 depicts the arrangement schematically but, as previously mentioned, it is very advantageous for both the air outlet 17 and air inlet 18 of the engine and the inlet 22 and outlet 24 of the charge air cooler to be situated close to the fastenings of the engine and the charge air cooler in the beams or base brackets, since the relative movements between engine, the coupling pipes and the charge air cooler are smaller close to the framework.

The invention is described above on the basis of an exemplifying embodiment. The invention is nevertheless not confined to that embodiment but is defined on the basis of the accompanying claims.

## Claims

1. An arrangement in a vehicle comprising a framework which supports a combustion engine (12) and a charge air cooler (23) to which air from a compressor belonging to the engine (12) is led in order to be cooled before being returned to the engine (12), which arrangement is configured such that the air is led from the engine (12) to the charge air cooler (23) via at least one first coupling pipe (20) which is connected to the engine (12) and the charge air cooler (23) by elastic connecting sleeves (19, 21), and that the cooled air is led from the charge air cooler (23) to the engine (12) via at least one second coupling pipe (26) which is connected to the charge air cooler (23) and the engine (12) by elastic connecting sleeves (25, 27), **characterized in that** the at least one first coupling pipe (20) and the at least one second coupling pipe (26) are fastened in the framework via two or more brackets (30).

2. An arrangement according to claim 1, **characterised in that** the engine (12), the charge air cooler (23), the first coupling pipe (20) and the second coupling pipe (26) are vibration-dampingly fastened to the vehicle's framework.

3. An arrangement according to claim 1 or 2, **characterised in that** the charge air cooler (23) has an inlet (22) and an outlet (24) which are situated close to the fastenings of the charge air cooler (23) to the framework.

4. An arrangement according to claim 1, 2 or 3, **characterised in that** the engine's air outlet (17) and air inlet (18) are situated close to the fastenings of the engine (12) in the framework.

5. An arrangement according to any one of the foregoing claims, **characterised in that** the first coupling pipe (20) and the second coupling pipe (26) extend substantially parallel between the engine (12) and the charge air cooler (23).

6. An arrangement according to any one of the foregoing claims, **characterised in that** the framework has two beams (11) and/or two base brackets (10), to which the engine (12) and the charge air cooler (23) are fastened, and that the first coupling pipe (20) and the second coupling pipe (26) extend substantially parallel with the beams (11) or base brackets (10) and are fastened to different beams (11) or base brackets (10).

7. A vehicle comprising an arrangement according to any one of claims 1 to 6.

## Patentansprüche

1. Anordnung in einem Fahrzeug, umfassend einen Rahmen, der einen Verbrennungsmotor (12) und einen Ladeluftkühler (23) trägt, zu dem Luft von einem Verdichter, der zu dem Motor (12) gehört, geführt wird, um abgekühlt zu werden, bevor sie zu dem Motor (12) zurückgeführt wird, wobei die Anordnung derart konfiguriert ist, dass die Luft von dem Motor (12) zu dem Ladeluftkühler (23) über mindestens ein erstes Kopplungsrohr (20), das mit dem Motor (12) und dem Ladeluftkühler (23) durch elastische Rohrmuffen (19, 21) verbunden ist, geführt wird, und dass die gekühlte Luft von dem Ladeluftkühler (23) zu dem Motor (12) über mindestens ein zweites Kopplungsrohr (26), das mit dem Ladeluftkühler und dem Motor (12) durch elastische Rohrmuffen (25, 27) verbunden ist, geführt wird, **dadurch gekennzeichnet, dass** das mindestens eine erste Kopplungsrohr (20) und das mindestens eine zweite Kopplungsrohr (26) in dem Rahmen über eine oder mehrere Halterungen (30) befestigt sind.

2. Anordnung nach Anspruch 1, **dadurch gekennzeichnet, dass** der Motor (12), der Ladeluftkühler (23), das erste Kopplungsrohr (20) und das zweite Kopplungsrohr (26) schwingungsdämpfend an dem Rahmen des Fahrzeugs befestigt sind.

3. Anordnung nach Anspruch 1 oder 2, **dadurch gekennzeichnet, dass** der Ladeluftkühler (23) einen Einlass (22) und einen Auslass (24) aufweist, die sich in der Nähe der Befestigungen des Ladeluftkühlers (23) an dem Rahmen befinden.

4. Anordnung nach Anspruch 1, 2 oder 3, **dadurch gekennzeichnet, dass** sich der Luftauslass (17) und der Lufteinlass (18) des Motors in der Nähe der Befestigungen des Motors (12) in dem Rahmen befinden.

5. Anordnung nach einem der vorhergehenden Ansprüche, **dadurch gekennzeichnet, dass** sich das erste Kopplungsrohr (20) und das zweite Kopplungsrohr (26) im Wesentlichen parallel zwischen dem Motor (12) und dem Ladeluftkühler (23) erstrecken.

6. Anordnung nach einem der vorhergehenden Ansprüche, **dadurch gekennzeichnet, dass** der Rahmen zwei Träger (11) und/oder zwei Basishalterungen (10) aufweist, an denen der Motor (12) und der Ladeluftkühler (23) befestigt sind, und dass sich das erste Kopplungsrohr (20) und das zweite Kopplungsrohr (26) im Wesentlichen parallel zu den Trägern (11) oder den Basishalterungen (10) erstrecken und an verschiedenen Trägern (11) oder Basishalterungen (10) befestigt sind.

7. Fahrzeug, umfassend eine Anordnung nach einem der Ansprüche 1 bis 6.

## Revendications

1. Agencement dans un véhicule comprenant un châssis qui supporte un moteur à combustion (12) et un refroidisseur d'air de suralimentation (23) auquel de l'air provenant d'un compresseur appartenant moteur (12) est conduit pour être refroidi avant d'être renvoyé au moteur (12), lequel agencement est configuré de telle sorte que l'air est conduit du moteur (12) au refroidisseur d'air de suralimentation (23) par l'intermédiaire d'au moins un premier tuyau de raccordement (20) qui est relié au moteur (12) et le refroidisseur d'air de suralimentation (23) par des manchons de raccordement élastiques (19, 21), et que le refroidisseur d'air de suralimentation est conduit du refroidisseur d'air de suralimentation (23) au moteur (12) par l'intermédiaire d'au moins une deuxième tuyau de raccordement (26) connecté au refroidisseur d'air de suralimentation (23) et au moteur (12) par des manchons de raccordement élastiques (25, 27), **caractérisé en ce que** l'au moins un premier tuyau de raccordement (20) et l'au moins un deuxième tuyau de raccordement (26) sont fixés dans le châssis avec deux ou plusieurs supports (30).

2. Agencement selon la revendication 1, **caractérisé en ce que** le moteur (12), le refroidisseur d'air de suralimentation (23), le premier tuyau de raccordement (20) et le deuxième tuyau de raccordement (26) sont fixés à la structure du véhicule par amortissement des vibrations.

3. Agencement selon la revendication 1 ou 2, **caractérisé en ce que** le refroidisseur d'air de suralimentation (23) dispose d'une entrée (22) et d'une sortie (24) qui se trouvent près des fixations du refroidisseur d'air de suralimentation (23) sur le châssis.

4. Agencement selon la revendication 1, 2 ou 3, **caractérisé en ce que** la sortie d'air (17) et l'entrée d'air (18) du moteur se trouvent près des fixations du moteur (12) dans le châssis.

5. Agencement selon l'une quelconque des revendications précédentes, **caractérisé en ce que** le premier tuyau de raccordement (20) et le deuxième tuyau de raccordement (26) s'étendent sensiblement de manière parallèle entre le moteur (12) et le refroidisseur d'air de suralimentation (23).

6. Agencement selon l'une quelconque des revendications précédentes, **caractérisé en ce que** le châssis a deux faisceaux (11) et/ou deux supports de base (10), auxquels le moteur (12) et le refroidisseur d'air de suralimentation (23) sont fixés, et auxquels le premier tuyau de raccordement (20) et le deuxième tuyau de raccordement (26) s'étendent sensiblement de manière parallèle aux faisceaux (11) ou aux supports de base (10) et sont fixés aux différents faisceaux (11) ou aux supports de base (10).

7. Véhicule comprenant un agencement selon l'une quelconque des revendications 1 à 6.
